(19) Europäisches Patentamt
European Patent Office
Office européen des brevets

(11) Veröffentlichungsnummer: **0 164 501 B1**

(12) **EUROPÄISCHE PATENTSCHRIFT**

(45) Veröffentlichungstag der Patentschrift: **23.06.93**

(51) Int. Cl.[5]: **B29C 33/56**, B29C 33/58, B29C 67/20, C08G 18/00

(21) Anmeldenummer: **85102779.7**

(22) Anmeldetag: **12.03.85**

Die Akte enthält technische Angaben, die nach dem Eingang der Anmeldung eingereicht wurden und die nicht in dieser Patentschrift enthalten sind.

# (54) Formtrennmittel und mit diesem durchführbares Verfahren zur Herstellung von Gegenständen aus Polyurethanschaum.

(30) Priorität: **16.03.84 DE 3410219**

(43) Veröffentlichungstag der Anmeldung: **18.12.85 Patentblatt 85/51**

(45) Bekanntmachung des Hinweises auf die Patenterteilung: **23.06.93 Patentblatt 93/25**

(84) Benannte Vertragsstaaten: **AT BE DE FR GB IT NL SE**

(56) Entgegenhaltungen:
**EP-A- 149 455**
**DD-A- 113 715**
**DE-A- 1 479 464**
**DE-A- 2 630 846**
**DE-A- 2 713 900**
**DE-A- 2 805 951**
**DE-B- 2 125 948**
**FR-A- 1 386 674**
**GB-A- 1 193 882**
**GB-A- 2 081 637**
**US-A- 3 872 038**

(73) Patentinhaber: **AIR PRODUCTS AND CHEMICALS PURA GmbH & Co.**
**Robert-Koch-Str. 27**
**W-2000 Norderstedt(DE)**

(72) Erfinder: **Fischer, Wolfgang**
**Helklingerstrasse 31**
**W-6942 Mürlenbach(DE)**
Erfinder: **Krug, William**
**Laubenweg 7**
**W-6900 Heidelberg(DE)**

(74) Vertreter: **UEXKÜLL & STOLBERG Patentanwälte**
**Beselerstrasse 4**
**W-2000 Hamburg 52 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Die Herstellung von Gegenständen aus Polyurethanschaum erfolgt in Formen und kann nach den verschiedensten, aus dem Stand der Technik bekannten Verfahren erfolgen. Sowohl hinsichtlich der dabei einzusetzenden, den Schaum bildenden Komponenten als auch hinsichtlich der einzusetzenden Vorrichtungen und Formwerkzeuge gibt es eine große Vielfalt von Variationsmöglichkeiten, die dem Fachmann geläufig sind. In der Regel erfolgt die Beschickung der Form entweder im offenen oder geschlossenen Zustand durch einen Einschußkanal mit den über einen Mischkopf vermengten Polyol- und Isocyanat-Komponenten. Neben dem angestrebten Produkt und dessen gewünschten Eigenschaften richtet sich die Zusammensetzung der Komponenten danach, ob nach dem Einstufenverfahren (Direktverfahren) oder nach dem Zweistufenverfahren (Präpolymerverfahren oder Semipräpolymerverfahren) gearbeitet wird. Alle diese verschiedenen möglichen Verfahrensweisen sind in der Literatur ausführlich beschrieben, so daß sich ein detailliertes Eingehen darauf erübrigt. Es sei hierzu beispielsweise auf "Integralschaumstoffe", Piechota und Röhr, 1975; Kunststoff Handbuch Band VII, "Polyurethane", 1966; "Schaumkunststoffe", herausgegeben vom Fachverband Schaumkunststoffe in GKV, 1976 und Wittfoht, Kunststoff-Technisches Wörterbuch, Teil 3, verwiesen.

Zwecks leichter und sauberer Entnahme der auspolymerisierten Schaumgegenstände ist es erforderlich, die Form vor ihrer Beschickung mit einem Trennmittel (Formtrennmittel) zu behandeln. Zu diesem Zweck werden die Werkzeugoberflächen unter Erzeugung eines Trennfilms mit einer gleichmäßigen Beschichtung durch ein Trennmittel versehen. Neben guten Entformungseigenschaften muß das Trennmittel in speziellen Fällen darüber hinaus einen Einfluß hinsichtlich der Oberflächenbeschaffenheit des fertigen Polyurethanschaumgegenstandes ausüben können. So werden durch bestimmte Zusätze, beispielsweise auf dem Kaltweichschaumsektor (Sitze, Nackenstützen, Armlehnen usw. in Autos) Offenzelligkeit und dadurch die geforderte "Atmungsfähigkeit" des Schaumgegenstandes erzeugt.

Herkömmliche Trennmittel bestehen aus organischen Lösungsmitteln und darin dispergierten trennwirksamen Substanzen, die in ihrer Gesamtheit als Festkörper bezeichnet werden. Der Festkörperanteil, der sich aus Wachsen, Fetten (sowohl langkettige Kohlenwasserstoffe als auch Triglyceride wie z.B. Rindertalg), Silikonverbindungen, Weichmachern, Stabilisatoren, Beschleunigern usw. zusammensetzt, schwankt je nach Anwendungsgebiet zwischen 1 und 8 Gew.%. Die im Trennmittel überwiegenden Anteile an Lösungsmitteln wie beispielsweise Frigen®, Methylenchlorid, Trichlorethan, Perchlorethylen, Benzine und hochsiedende Benzinkohlenwasserstoffe dienen als Träger, um die trennwirksamen Substanzen als gleichmäßigen Trennfilm auf die Werkzeugoberflächen aufzubringen. Während halogenierte Kohlenwasserstoffe ausschließlich eine Vehikelfunktion erfüllen, wird durch den Benzinanteil ein gleichmäßiger Verlauf des Trennmittelfilms erzielt, welcher sekundär ebenfalls einen positiven Einfluß auf die Trennwirkung ausübt.

Festkörperzusammensetzung, Festkörperanteil und Lösungsmittelkombination werden in Abhängigkeit von der Formentemperatur, der Ablüftezeit (Zeit vom Trennmittelauftrag bis zum Komponenteneintrag) und jeweiligem Schaumsystem (Integral-, Hartintegral-, Kaltweichschaum) konzipiert. Auf diese Weise können die verschiedensten Gegenstände mit sehr unterschiedlichen Eigenschaften hergestellt werden. So wird beispielsweise Integralschaum zur Herstellung von Lenkrädern für Automobile verwendet, wobei spezielle Anforderungen an die Oberfläche (Gleichmäßigkeit und gute Griffeigenschaften) gestellt werden. Die Formtemperatur liegt bei der Herstellung von Integralschaum in der Regel zwischen 30 und 50° C. Demgegenüber liegt die Temperatur des Formwerkzeugs beim RIM-Verfahren (RIM-Schaum), das häufig zur Herstellung von polierten Formteilen verwendet wird, bei 50 bis 70° C. Ähnliche Temperaturen, nämlich im Bereich von 40 bis 70° C, weisen die Formwerkzeuge bei der Herstellung von Gegenständen aus Kaltweichschaum wie Sitzen, Kopfstützen und Armlehnen für Automobile auf. Bei der Herstellung von Gegenständen aus Hartschaum wie Konsolen für Automobile, Fensterläden, Kühlschrankelementen, Möbelteilen und Stühlen beträgt die Temperatur der Form in der Regel 30 bis 50° C.

Beim Trennmitteleintrag, welcher in den meisten Fällen über eine Airless-Sprühvorrichtung erfolgt, verdampfen die Lösungsmittel weitgehend als azeotropes Gemisch von der je nach vorliegendem Schaumsystem zwischen 25 und 70° C erwärmten Werkzeugoberfläche.

Gemeinsam mit dem Overspray werden diese Dämpfe über entsprechende Absauganlagen aus dem Arbeitsfeld entfernt. Abgesehen vom Verlust wertvoller Rohstoffe ist in diesen Schadstoffemissionen eine bedeutende Umweltbelastung zu sehen. Recyclingverfahren wären mit Adsorptionsanlagen denkbar, jedoch stellen hier die in feinverteilter Form vorliegenden Feststoffanteile, die weder über Filter noch Wasserwände eliminiert werden können, ein großes Problem dar. Die sofort mit Wachs und Fett belegten Adsorptionsschichten müßten in kürzesten Zeitabständen regeneriert werden, was einen enormen arbeitsmäßigen und finanziellen Aufwand bedeutet.

Es ist bekannt, daß die geschilderten Probleme auf einigen wenigen Gebieten (Heißschaum, modifizierter Integralschaum bei Hinterschäumungsprozessen) durch Verwendung von Trennmitteln vermieden werden können, deren organische Lösungsmittel weitgehend durch Wasser ersetzt sind. Hierbei handelt es sich um Wachsdispersionen oder -emulsionen, deren Verwendung bisher jedoch großen Einschränkungen hinsichtlich der Oberflächenbeschaffenheit der Schaumgegenstände unterlegen hat. Darüber hinaus sind bei den oben beschriebenen Schaumherstellungsverfahren und den dabei angewandten Formtemperaturen erhebliche Ablüftezeiten erforderlich, die einen Einsatz bei der industriellen Massenproduktion unter wirtschaftlichen Gesichtspunkten uninteressant machen.

Der wesentliche Grund für die obigen Einschränkungen besteht bei wäßrigen Trennmittelsystemen neben dem ungünstigen Abdunstverhalten und unzureichender Filmausbildung in der parallel zur Polyol-Isocyanat-Reaktion ablaufenden Konkurrenzreaktion zwischen Wasser und Isocyanatgruppen ($R-N=C=O + H_2O \rightarrow R-NH_2 + CO_2$), die Kohlendioxid freisetzt und das genau abgestimmte Polyol/Isocyanat-Verhältnis partiell verschiebt. Dies führt zu Schaumstörungen in Form von Verfärbungen über Blasen, Lunkerbildungen (Gaseinschlüsse) bis hin zum teilweisen Schaumkollaps. Außerdem kommt es beim Eintrag der schaumbildenden Komponenten mittels Einschußkanal zu einer innigen Vermischung der Komponenten mit dem im Einschußkanal befindlichen Trennmittel. Hier können als weitere Störungen Schrumpfungen beobachtet werden.

Aus den im vorangegangenen Absatz genannten Gründen sind beispielsweise die in GB-A-1 193 882, GB-A-2 081 637 und DE-B 1 271 876 beschriebenen Zusammensetzungen zur Verwendung in Verfahren zur Herstellung von Gegenständen aus Polyurethanschaum in Formen nicht geeignet.

Weiterhin sind weitgehend wäßrige Trennmittel bekannt, die jedoch immer noch neben Wasser wesentliche Anteile an niedrigsiedenden wasserlöslichen Alkoholen, Ketonen, Estern usw. als Verdunstungsbeschleuniger enthalten. Diese Komponenten vermindern zwar die bei wäßrigen Trennmitteln erforderlichen längeren Abdunstzeiten, beseitigen jedoch nicht die oben beschriebene Reaktion zwischen Wasser und Isocyanat. Zusätzlich beinhalten diese wasserlöslichen Verdunstungsbeschleuniger nach wie vor eine erhebliche Umweltbelastung.

In der Praxis haben sich wäßrige Trennmittel der oben beschriebenen Art, die in der Regel wesentliche Bestandteile an Lösungsvermittlern enthalten, aufgrund der geschilderten Nachteile bisher nicht durchsetzen können.

Der Erfindung liegt nun die Aufgabe zugrunde, ein wäßriges Trennmittel auf Basis eines ausschließlich aus Wasser bestehenden Lösungsmittelsystems vorzuschlagen, das sich ganz allgemein für die Herstellung von Gegenständen aus Polyurethanschäumen in Formen eignet und dadurch die Umweltbelastung mit organischen Lösungsmitteldämpfen völlig vermeidet, ohne daß die mit den bisher nur auf Sondergebieten eingesetzten weitgehend wäßrigen Trennmitteln verbundenen Nachteile eintreten.

Zur Lösung dieser Aufgabe wird ein für die Herstellung von Gegenständen aus Polyurethanschaum geeignetes, Wachs, Fett und/oder Petrolatum enthaltendes Trennmittel in Form einer von organischen Lösungsmitteln freien, wäßrigen Emulsion oder Dispersion aus an sich bekannten trennwirksamen Substanzen sowie gegebenenfalls üblichen Zusätzen mit einem Wassergehalt von mindestens 60 Gew.%, vorzugsweise 85 bis 96 Gew.% vorgeschlagen, wobei das Wasser unter Verwendung eines Maskierungshilfsmittels durch den Effekt der lyotropen Mesomorphie maskiert ist und die Verwendung von Seifen als alleiniges Maskierungshilfsmittel ausgeschlossen ist.

Gegenstand der Erfindung ist ferner ein Verfahren zur Herstellung von Gegenständen aus Polyurethanschaum, bei dem der Gegenstand in herkömmlicher Weise durch Schäumen in einer Form hergestellt wird, das dadurch gekennzeichnet ist, daß man die Form vor ihrer Beschickung mit den schaumbildenden Komponenten mit einem wie oben definierten Trennmittel.

Es wurde überraschend gefunden, daß die störende Konkurrenzreaktion zwischen Wasser und Isocyanat unterdrückt werden kann, wenn die Beweglichkeit und Reaktivität der Wasser-Dipolmoleküle ausgeschaltet bzw. entscheidend verringert wird. Eine solche "Maskierung" der Wassermoleküle gelingt über den Effekt der lyotropen Mesomorphie. Als Mesophasen bezeichnet man Zustände von Stoffen, die gleichzeitig Eigenschaften von Flüssigkeiten und kristallinen Körpern zeigen (vgl. hierzu Fette und Öle, Tenside, Waschmittel, Zeitschrift für die Waschmittel-, Seifen-Öl- und Fettindustrie, 1983, Seite 4). Hierbei werden die Wassermoleküle immobilisiert, so daß die Konkurrenzreaktion zwischen Wasser und Isocyanat so stark zurückgedrängt wird, daß sie praktisch keine Rolle mehr spielt.

Die erfindungsgemäße Maskierung der Wassermoleküle über den Effekt der lyotropen Mesomorphie erfolgt durch die kombinierte Verwendung von trennwirksamen Substanzen und geeigneten Maskierungshilfsmitteln, d.h. durch den Einsatz von unter Verwendung eines Maskierungshilfsmittels emulgiertem Wachs, Fett und/oder Petrolatum. Die Bezeichnungen "Wachs", "Fett" und "Petrolatum" umfassen selbstverständlich auch Gemische geeigneter Wachse, Fette und Petrolatumfraktionen. Der Begriff "Fett" umfaßt

sowohl langkettige Kohlenwasserstoffe (Schmierfette) als auch Triglyceride (siehe oben). Bevorzugt werden Mikrowachse und mit einem anorganischen oder organischen Verdicker eingedickte Petrolatumfraktionen in Kombination mit dem Maskierungshilfsmittel zur Immobilisierung der Wassermoleküle eingesetzt.

Als geeignete Maskierungshilfsmittel haben sich insbesondere Tenside mit einem HLB-Wert (nach W.C. Griffin,Journ.Soc.Cosm.Chemists, 1 (1949), 311; 5 (1954), 249; siehe auch z.B. Römpps Chemie-Lexikon, Band 3: H-L (1973), 1478 - 1479 sowie die vielen inzwischen veröffentlichten HLB-Wert-Tabellen) von 8 bis 15, vorzugsweise 10 bis 12, erwiesen, wobei nichtionische Tenside wie Fettalkoholpolyglykolether (siehe unten) nach den bisher durchgeführten Versuchen bevorzugt sind. Besonders vorteilhafte Ergebnisse sind mit ethoxylierten Fettalkoholen erzielt worden. Je nach Mengenverhältnis von Fettalkohol zu Wasser bilden sich viskose Lösungen bis hin zu vaselineartigen Produkten, in denen die Wassermoleküle über stabile Brückenbindungen mit den ethoxylierten Fettalkoholmolkekülen verankert, gleichsam in einer raumnetzartigen, elektrisch neutralen Matrix vorliegen und so insbesondere auf dem empfindlichen Kaltweichschaumgebiet keine störenden Nebeneffekte bewirken. Geeignete ethoxylierte Fettalkohole, vorzugsweise mit einem Ethoxylierungsgrad von 5 bis 12 und insbesondere 7 bis 9, sind im Handel von einer Vielzahl von Firmen als Emulgatoren erhältlich. So besitzt ein erfindungsgemäß erfolgreich eingesetztes, im Handel erhältliches Fettalkoholethoxylat beispielsweise eine Dichte bei 50°C von 0,91 g/cm$^3$, einen Schmelzpunkt von etwas über 40°C, einen pH-Wert (1 % in Wasser) von 6 bis 7,5, einen Trübungspunkt (DIN 53917, °C) (5 g in 25 g Butyldiglykollösung) von etwa 65 und einen HLB-Wert von etwa 11. Unter Fettalkoholen werden hier handelsübliche Fettalkohole verstanden, die in der Regel Kohlenstoffzahlen von 9 bis 22 ($C_9$-$C_{22}$-Fettalkohole)aufweisen. Brauchbare Eigenschaften als Maskierungshilfsmittel haben auch andere ethoxylierte Verbindungen, wie z.B. ethoxyliertes Nonylphenol.

Die Menge des einzusetzenden Maskierungshilfsmittels, d.h. die zur ausreichenden Immobilisierung der Wassermoleküle erforderliche Menge, kann je nach Maskierungshilfsmittel und trennwirksamer Substanz schwanken, ist aber durch wenige Versuche leicht zu ermitteln. Bezüglich der ethoxylierten Fettalkohole, mit denen besonders vorteilhafte Ergebnisse erzielt worden sind, hat sich, bezogen auf die Gesamtzusammensetzung, ein Gehalt von 0,5 bis 5 Gew.% und vorzugsweise 1 bis 2,5 Gew.% als geeignet herausgestellt.

Bei den in Kombination mit dem Maskierungshilfsmittel zur Immobilisierung der Wassermoleküle dienenden trennwirksamen Substanzen handelt es sich um an sich bekannte trennwirksame Substanzen (siehe oben), die unter Verwendung der geeigneten Maskierungshilfsmittel gegebenenfalls in Kombination mit den von den Herstellern jeweils empfohlenen Emulgatoren in die wäßrige Basis eingearbeitet werden. Als besonders geeignet haben sich die bereits oben genannten trennwirksamen Substanzen erwiesen. Darüber hinaus können auch noch weitere an sich bekannte trennwirksame Substanzen eingesetzt werden. Hierbei sei insbesondere auf die Silikontrennmittel hingewiesen, die zusammen mit Wachsen und eingedickten Petrolatumfraktionen eine besonders wirkungsvolle Kombination von trennwirksamen Substanzen ergeben.

Bei den erfindungsgemäß bevorzugt eingesetzten Wachsen handelt es sich um Mikrowachse mit Schmelzpunkten zwischen 50 und 120°C, die als Trennmittel bekannt und im Handel erhältlich sind. Häufig enthalten diese Mikrowachse bereits einen Emulgator.

Auch die weiterhin erfindungsgemäß als trennwirksame Substanz bevorzugten eingedickten Petrolatumfraktionen sind aus dem Stand der Technik bekannte und im Handel erhältliche Trennmittel. Sie enthalten anorganische Verdicker wie Tone (z.B. Bentonite oder Montmorillonit), hochdisperse Kieselsäure oder organische Verdicker wie feinteiliges Polyethylenpulver oder Polybutene.

Zur Verbesserung der Verträglichkeit mit dem Petrolatum sind die anorganischen Verdicker üblicherweise mit organischen Verbindungen modifiziert. Derartige modifizierte anorganische Verdicker wie organische Montmorillonitderivate und oberflächenmodifizierte hochdisperse Kieselsäure sowie eine Vielzahl organischer Verdicker sind ebenfalls im Handel erhältlich, so daß es keine Schwierigkeiten bereitet, die im Handel erhältlichen Trennmittel auf Petrolatumbasis durch zusätzliche Verdicker zu verändern oder spezielle Trennmittel auf Petrolatumbasis zu formulieren. Letzteres kann durch einfaches Einrühren des Verdickers in das Petrolatum erfolgen, was natürlich nicht ausschließt, daß man mit anspruchsvolleren Vorrichtungen wie beispielsweise einem Dreiwalzenstuhl in manchen Fällen homogenere Produkte erhält. Als erfindungsgemäß geeignet hat sich beispielsweise eine eingedickte Petrolatumfraktion erwiesen, die etwa 4 Gew.% eines organischen Tonderivates als Verdicker enthält. Es können auch nicht eingedickte Petrolatumfraktionen verwendet werden, wenngleich dies zumindest nach bisherigen Erkenntnissen nicht bevorzugt ist. Petrolatum ist im übrigen im Handel leicht erhältlich und in der Literatur beschrieben (siehe z.B. Römpps Chemie Lexikon, 7. Auflage, 1974, Band 4: M-Pk, Seite 2578). Die besondere Eignung der eingedickten Petrolatumfraktionen als Bestandteil des erfindungsgemäßen Trennmittels besteht darin, daß sie aufgrund ihres vaselineartigen Charakters einen Thixotropieeffekt im erfindungsgemäßen Trennmittel bewirken, der das Versprühen des Trennmittels durch Vermeidung von Tropfenbildung insbesondere auf schrägen

Flächen oder Kanten wesentlich vereinfacht.

Bei den an sich bekannten, bereits oben erwähnten, erfindungsgemäß bevorzugt miteingesetzten Silikontrennmitteln handelt es sich um mit organischen Gruppen modifizierte Polysiloxane. Diese besitzen eine Struktur, die im wesentlichen der Formel

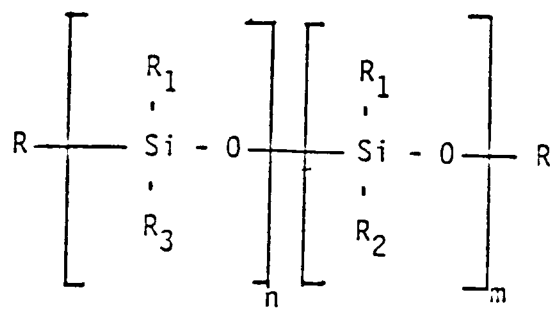

entspricht, in der $R_1$ und $R_2$ gleich oder verschieden sind und Alkylreste (in der Regel mit nicht mehr als etwa 10 bis 12 C-Atomen) wie Methyl- oder Ethylreste und/oder Arylreste wie Phenylreste bedeuten, während es sich bei $R_3$ um längere Seitenketten (mit gewöhnlich nicht mehr als 15 C-Atomen und meist weniger als 10 oder 12 C-Atomen) mit OH- oder Aminfunktion handelt. Diese längeren Seitenketten verringern die Hydrophobie der Trennmittel und verbessern ihre Benetzbarkeit, ihr Haftvermögen und ihre Filmbildungseigenschaften. R ist in der Regel ebenfalls ein Alkyl- oder Arylrest entsprechend $R_1$ und $R_2$. Die Summe von n und m liegt gewöhnlich in der Größenordnung von 50 bis 1200. Für die erfindungsgemäßen Zwecke haben sich beispielsweise der obigen Formel entsprechende Polydimethylsiloxane mit die Hydrophobie vermindernden Seitenketten ($R_3$) als geeignet erwiesen.

Die Brauchbarkeit der beschriebenen Silikontrennmittel (Polysiloxane) im erfindungsgemäßen wäßrigen Trennmittel ist äußerst überraschend, da derartige Silikontrennmittel normalerweise in wäßrigen Systemen zum Schaumkollaps führen und deshalb nicht eingesetzt werden können. In der erfindungsgemäßen Matrix tritt dieser Effekt überraschend nicht bzw. in sehr viel geringerem Maße ein. Ganz im Gegenteil führt die Verwendung dieser Silikontrennmittel durch Herabsetzung der Oberflächenspannung zu gleichmäßig dünnen Trennmittelfilmen, bewirken also einen guten Verlauf des Trennmittels ohne Tropfenbildung.

Ein erfindungsgemäßes Trennmittel enthaltendeine Kombination von Mikrowachs, Silikontrennmittel und eingedickter Petrolatumfraktion führt zu dünnsten thixotropen Filmen, was eine Verwendung sogar auf dem Integrale- und Hartschaumgebiet ermöglicht.

Hinzuweisen ist in diesem Zusammenhang auch auf die Verwendung bzw. Mitverwendung von Polyglykolen, wie Polyethylenglykol und insbesondere Polypropylenglykol, die ausgezeichnete Konsistenzregler sind und dazu dienen, den Trennmittelfilm geschmeidig und zäh zu machen. Besonders Polypropylenglykol mit einem Molekulargewicht im Bereich von etwa 2000 hat zu guten Ergebnissen geführt. Konzentrationen von 0,5 bis 3 Gew.% und vorzugsweise 1,5 Gew.% haben sich als geeignet herausgestellt.

Weiterhin können die Eigenschaften des Trennmittels durch Zusatz von Verlaufmitteln verbessert werden. Als solche können vorzugsweise nichtionische Fettsäurepolyglykolester eingesetzt werden. Sie dienen zur Verringerung der Oberflächenspannung des Trennmittels beim Aufsprühen und tragen somit dazu bei, daß eine Tropfenbildung, die insbesondere bei kalten Formen und nicht optimalen Düsen auftreten kann, verhindert wird. Gleichzeitig sind die als Verlaufmittel bevorzugt verwendeten Fettsäurepolyglykolester Wachsemulgatoren, so daß die Emulgierung bzw. Dispergierung der Wachse im Falle ihrer Verwendung zusätzlich gefördert wird.

Die Herstellung des erfindungsgemäßen Trennmittels kann nach den in der Emulsions- und Dispersionstechnik üblichen Verfahren (vgl. beispielsweise Seifen-Öle-Fette-Wachse 107. Jg. - Nr. 14/1981, Seiten 391 bis 402) erfolgen. In der Regel wird das Wasser oder zumindest ein Teil des Wassers vorgelegt und dann werden die verschiedenen trennwirksamen Substanzen sowie gegebenenfalls übliche Zusätze zu diesen Substanzen unter Verwendung von Emulgatoren eingearbeitet.

Zeitpunkt und Reihenfolge der Einarbeitung von trennwirksamen Substanzen und Maskierungshilfsmittel können beliebig gewählt werden. So kann die Einarbeitung der jeweiligen trennwirksamen Substanz und des damit kombinierten Maskierungshilfsmittels für Wasser am Anfang, zwischendurch oder am Ende erfolgen. Selbstverständlich sind zur Erleichterung des Emulgiervorganges erhöhte Temperaturen, insbesondere von 90°C und mehr bevorzugt. Auch ohne stabilisierende Zusätze besitzt die erfindungsgemäße Trennmittelemulsion bzw. -dispersion eine sehr gute Stabilität, wobei besonders vorteilhaft ist, daß zu ihrer

Herstellung normales Leitungswasser verwendet werden kann, also kein normalerweise erforderliches entionisiertes Wasser eingesetzt zu werden braucht.

Die Wahl des bevorzugt verwendeten Wachses richtet sich im wesentlichen nach dem mit dem Trennmittel durchzuführenden Verfahren, d.h. der Formtemperatur. Je höher die Formtemperatur, desto höher muß der Schmelzpunkt des Wachses sein. Die zum Emulgieren des Wachses erforderliche Emulgatormenge (Maskierungshilfsmittel und gegebenenfalls weiterer Emulgator) entspricht den Spezifikationen der für das Emulgieren von Wachsen im Handel angebotenen Emulgatoren. Bezogen auf die Wachsmenge beträgt der Emulgatoranteil 5 bis 30 Gew.%, wobei allerdings der Einfluß des Emulgators auf die Eigenschaften des Wachses berücksichtigt werden muß. Bevorzugt ist es, daß der Emulgator in seiner Konsistenz dem Wachs möglichst nahekommt und nur in geringen Konzentrationen angewendet werden muß, damit die Eigenschaften des Wachses möglichst unverändert bleiben. Gut bewährt haben sich beispielsweise im Handel erhältliche Fettalkoholpolyglykolether bzw. Mischungen von Fettalkoholpolyglykolethern (siehe oben).

Für das Silikontrennmittel (Polysiloxan) wird ebenfalls ein hierfür bekannter und im Handel erhältlicher Emulgator verwendet. Gute Ergebnisse wurden beispielsweise mit ethoxylierten Alkylphenolen erzielt, wobei die in den Spezifikationen der Handelsprodukte angegebenen Mengen angewendet werden können.

Vorzugsweise liegt das Gewichtsverhältnis von Polysiloxan zu Wachs bei ungefähr 1:0,5 bis 1:20 und insbesondere 1:1 bis 1:10, kann aber in Abhängigkeit von den erforderlichen Verlaufeigenschaften des Trennmittelfilms und in Abhängigkeit des gewählten Wachses auch außerhalb dieser Bereiche liegen.

Der pH-Wert des erfindungsgemäßen Trennmittels soll vorzugsweise im Neutralbereich liegen, also zwischen 6 und 8. Vorzugsweise beträgt der pH-Wert 7. Ein zu hoher pH-Wert kann die Urethanbildung beschleunigen, während sie ein zu niedriger pH-Wert verzögern kann. Beides ist unerwünscht.

Während der Festkörperanteil (trennwirksame Substanzen) bei herkömmlichen lösungsmittelhaltigen Trennmitteln im Falle von Kaltweichschaum zwischen 1 und 3 Gew.% und im Falle von Hinterschäumungen zwischen 5 und 8 Gew.% liegt, liegt er beim erfindungsgemäßen wäßrigen Trennmittel in der Regel höher und kann bis zu ungefähr 15 Gew.% betragen. Der Festkörperanteil hängt selbstverständlich von der vorgesehenen Anwendung ab und kann beispielsweise für die Hinterschäumung 8 bis 15 Gew.% und bei Kaltweichschaum etwa 4 Gew.% betragen. Grundsätzlich kann festgestellt werden, daß der Festkörperanteil beim erfindungsgemäßen Trennmittel in Abhängigkeit von der vorgesehenen Anwendung etwa doppelt so hoch wie bei herkömmlichen lösungsmittelhaltigen Trennmitteln für dieselbe Anwendung ist.

Neben den oben beschriebenen Bestandteilen kann das erfindungsgemäße Trennmittel weitere übliche Bestandteile enthalten. So ist es bevorzugt, dem Trennmittel eine geringe Menge eines Biocids zuzusetzen. Ferner können in das erfindungsgemäße Trennmittel Substanzen eingearbeitet werden, die einen besonderen Einfluß auf den Polyurethanschaum und insbesondere die Oberflächenbeschaffenheit des Schaumgegenstandes haben. Zu diesen Substanzen gehören Polyurethanschaumstabilisatoren wie z.B. Silikonglykole und Beschleuniger (siehe oben) wie die auch in den zum Stand der Technik gehörenden Lösungsmittelsystemen verwendeten Zinnbeschleuniger (z.B. Dibutylzinndilaurat) und Aminbeschleuniger (z.B. Bis-(2-Dimethylaminoethyl)-ether). Insbesondere die Verwendung von Beschleunigern (gewöhnlich in einer Menge von 0,1 - 0,3 Gew.%) ist erfindungsgemäß erwünscht, da diese Beschleuniger die Polyol-Isocyanat-Reaktion bevorzugt an der Grenzfläche mit dem Trennmittelfilm beschleunigen, so daß die Schaumbildung in diesem Grenzflächenbereich schnell abgeschlossen ist, was zu einer verbesserten Entformung beiträgt. Zur Erzielung der bei Kaltweichschaum häufig erforderlichen Offenzelligkeit (siehe oben) können beispielsweise im Handel erhältliche Glykolsiloxantenside (Silikon/ Glykol-Copolymere) eingearbeitet werden. Diese wasserlöslichen Tenside können allerdings auch der Polyolkomponente direkt zugesetzt werden.

Bei höheren Formtemperaturen, insbesondere der Kaltweichschaum-Herstellung bei Temperaturen von 55 bis 60°C, hat sich außerdem die Verwendung von Seifen, d.h. Natrium- oder Kaliumoleaten und/oder -stearaten, als vorteilhaft erwiesen, da diese das Mikrowachs teilweise ersetzen können, was wiederum eine Verringerung des Emulgatorzusatzes erlaubt. Bei hohen Temperaturen, wie den zuvor genannten, ist nämlich eine zu große Emulgatormenge zu vermeiden, da der Emulgator dazu neigt, mit dem Isocyanat zu reagieren, was in unerwünschter Weise zu äußerst harten Schaumprodukten führt. Die in diesen Fällen vorteilhafterweise mitzuverwendenden Seifen besitzen eine Doppelfunktion insofern, als sie einerseits Mikrowachs (und auch andere der oben erwähnten trennwirksamen Substanzen) teilweise ersetzen können und gleichzeitig in gewissem Umfang auch zur Maskierung der Wassermoleküle beitragen.

Beispiel 1

Es wurde ein Trennmittel aus den folgenden Bestandteilen hergestellt:

| | |
|---|---|
| handelsübliches Mikrowachs (emulgatorhaltig) | 2,7 Gew.% |
| Polysiloxan | 2,0 Gew.% |
| eingedickte Petrolatumfraktion | 7,88 Gew.% |
| Biocid | 0,1 Gew.% |
| mittelhoch ethoxylierter Fettalkohol | 1,5 Gew.% |
| ethoxyliertes Nonylphenol (Ethoxylierungsgrad etwa 7) | 0,4 Gew.% |
| Mischung von Fettalkoholpolyglykolethern | 0,32 Gew.% |
| Fettalkoholpolyglykolether | 0,32 Gew.% |
| Wasser | 84,78 Gew.%. |

Die Herstellung von 10 kg des Trennmittels mit der obigen Zusammensetzung (Labormaßstab) erfolgte in der Weise, daß 50 % der Gesamtmenge Wasser vorgelegt und auf 95°C erhitzt wurden. Unter kräftigem Rühren wurden dann nacheinander die oben angegebenen Bestandteile unter Verwendung des jeweils geeigneten Emulgators eingearbeitet. So wurde das Mikrowachs zusammen mit der Mischung von Fettalkoholpolyglykolethern und dem Fettalkoholpolyglykolether (beide nicht ionisch, beide mit einem HLB-Wert von etwa 10,0) zugegeben, während der mittelhoch ethoxylierte Fettalkohol zusammen mit der eingedickten Petrolatumfraktion eingesetzt wurde. Das Polysiloxan wurde nach vorheriger Einbringung des ethoxylierten Nonylphenols eingearbeitet. Zum Schluß, als die Heizung schon abgestellt war, wurde noch das Biocid zugesetzt. Zwischen den Zugaben der genannten Komponenten wurde jeweils immer solange gewartet, bis die Emulsionsbildung abge schlossen bzw. Homogenität erreicht war. Das Abkühlen der so hergestellten Emulsion erfolgte unter starkem Rühren, indem der Kessel gekühlt und das restliche Wasser zugesetzt wurde. Nachdem die Temperatur auf unter 40°C abgesunken war, wurde die Emulsion durch einen Durchlaufdispergator geschickt. Die erhaltene Emulsion besaß eine sehr gute Stabilität und wies die oben angegebenen Eigenschaften auf. Das so hergestellte Trennmittel mit einem Festkörper von 15 Gew.% wurde in einem Automobilwerk bei der Herstellung von hinterschäumten Armaturenbrettern eingesetzt. Der Auftrag des Trennmittels erfolgte mittels einer Airless-Sprühvorrichtung. Die Oberflächeneigenschaften der erhaltenen Armaturenbretter entsprachen den Qualitätsanforderungen des Automobilherstellers. Ausgezeichnete Ergebnisse wurden mit diesem Trennmittel auch bei der Herstellung von Gegenständen aus Integralschaum verschiedener Härte erzielt.

Beispiel 2

In gleicher Weise wie in Beispiel 1 wurde ein Trennmittel mit einem Festkörperanteil von 4 Gew.% hergestellt, das allerdings keine eingedickte Petrolatumfraktion und kein Polysiloxan enthielt. Das so hergestellte Trennmittel wurde in einem Automobilwerk bei der Herstellung von Kopfstützen aus PU-Kaltweichschaum eingesetzt. Der Auftrag erfolgte wiederum mittels einer Airless-Sprühvorrichtung. Die Oberflächeneigenschaften der erhaltenen Kopfstützen war ausgezeichnet und ohne weiteres vergleichbar mit der von Kopfstützen, die unter Verwendung herkömmlicher lösungsmittelhaltiger Trennmittel hergestellt worden waren. Verfärbungen, Lunkerbildungen und Schaumkollaps wurden nicht beobachtet. Die erhaltenen Kopfstützen waren vielmehr von einwandfreier Qualität.

Beispiel 3

Wie in Beispiel 1 beschrieben, wurde ein Trennmittel aus den folgenden Bestandteilen hergestellt:

| | |
|---|---|
| handelsübliches Mikrowachs (emulgatorhaltig) | 2,7 Gew.% |
| Polypropylenglykol (MG 2000) | 2,0 Gew.% |
| eingedickte Petrolatumfraktion | 7,88 Gew.% |
| Biocid | 0,1 Gew.% |
| ethoxyliertes Nonylphenol (Ethoxylierungsgrad etwa 7) | 0,4 Gew.% |
| Mischung von Fettalkoholpolyglykolethern) | 0,32 Gew.% |
| Fettalkoholpolyglykolether | 0,32 Gew.% |
| Wasser | 86,28 Gew.%. |

Auch mit diesem Trennmittel wurden bei Versuchen in einem Automobilwerk Gegenstände aus Polyurethanschaum hergestellt, die eine sehr gute Qualität besaßen.

Beispiel 4

Ein weiteres, in Versuchen erprobtes Trennmittel, das wie in Beispiel 1 beschrieben hergestellt worden war, besaß folgende Zusammensetzung:

| | |
|---|---|
| hartes Mikrowachs | 1,8 Gew.% |
| ethoxyliertes Nonylphenol (Ethoxylierungsgrad etwa 7) | 0,2 Gew.% |
| Natriumoleat | 8 Gew.% |
| Fettsäurepolyglykolester (nichtionisch, HLB 10) | 2 Gew.% |
| Dibutylzinndilaurat | 0,2 Gew.% |
| Polypropylenglykol (MG 2000) | 1 Gew.% |
| Wasser | 86,8 Gew.%. |

**Patentansprüche**

1. Für die Herstellung von Gegenständen aus Polyurethanschaum geeignetes, Wachs, Fett und/oder Petrolatum enthaltendes Trennmittel in Form einer von organischen Lösungsmitteln freien, wäßrigen Emulsion oder Dispersion aus an sich bekannten trennwirksamen Substanzen sowie gegebenenfalls üblichen Zusätzen mit einem Wassergehalt von mindestens 60 Gew.%, vorzugsweise 85 bis 96 Gew.%, wobei das Wasser unter Verwendung eines Maskierungshilfsmittels durch den Effekt der lyotropen Mesomorphie maskiert ist und die Verwendung von Seifen als alleiniges Maskierungshilfsmittel ausgeschlossen ist.

2. Trennmittel nach Anspruch 1, bei dem das Maskierungshilfsmittel ein Tensid mit einem HLB-Wert von 8 bis 15 und vorzugsweise 10 bis 12 bzw. ein Gemisch derartiger Tenside ist.

3. Trennmittel nach Anspruch 2, bei dem das Tensid ein Fettalkoholpolyglykolether bzw. ethoxylierter Fettalkohol oder ein Gemisch dieser Verbindungen mit einem Ethoxylierungsgrad von 5 bis 12 und vorzugsweise 7 bis 9 ist.

4. Trennmittel nach einem der Ansprüche 1 bis 3, bei dem die oder eine der trennwirksamen Substanzen aus einem oder mehreren Mikrowachsen mit Schmelzpunkten zwischen 50 und 120 °C besteht.

5. Trennmittel nach einem der Ansprüche 1 bis 4, bei dem die oder eine der trennwirksamen Substanzen aus einer mit einem anorganischen oder organischen Verdicker eingedickten Petrolatumfraktion besteht.

6. Trennmittel nach einem der Ansprüche 1 bis 5, das als zusätzliche trennwirksame Substanz ein übliches Silikontrennmittel und/oder Seifen enthält.

7. Trennmittel nach einem der Ansprüche 1 bis 6, das Polyglykole, insbesondere Polypropylenglykol, und/oder Beschleuniger und/oder nichtionische Fettsäurepolyglykolester als Verlaufmittel enthält.

8. Verfahren zur Herstellung von Gegenständen aus Polyurethanschaum, bei dem der Gegenstand in herkömmlicher Weise durch Schäumen in einer Form hergestellt wird, **dadurch gekennzeichnet**, daß man die Form vor ihrer Beschickung mit den schaumbildenden Komponenten mit einem Trennmittel gemäß einem der Ansprüche 1 bis 7 behandelt.

## Claims

1. Release agent containing wax, fat and/or petrolatum which is suitable for producing articles made of polyurethane foam in the form of an aqueous emulsion or dispersion which is free from organic solvents and formed from substances with a separating action which are known in themselves, as well as, where applicable, of usual additions with a water content of at least 60% by weight and preferably 85 to 96% by weight, the water being masked by the effect of the lyotropic mesomorphy using an auxiliary masking agent with the use of soaps as a sole auxiliary masking agent being excluded.

2. Release agent according to claim 1, in which the auxiliary masking agent is a surfactant with an HLB value of 8 to 15 and preferably 10 to 12 or a mixture of this type of surfactants.

3. Release agent according to claim 2, in which the surfactant is a fatty alcohol polyglycol ether or ethoxylated fatty alcohol or a mixture of these compounds with a degree of ethoxylation of 5 to 12 and preferably 7 to 9.

4. Release agent according to one of claims 1 to 3, in which the or one of the substances with a separating action consists of one or several microwaxes with melting points of between 50 and 120 °C.

5. Release agent according to one of claims 1 to 4, in which the or one of the substances with a separating action consists of a petrolatum fraction concentrated with an inorganic or organic thickener.

6. Release agent according to one of claims 1 to 5, which contains a usual silicone separating agent and/or soaps as an additional substance with separating action.

7. Release agent according to one of claims 1 to 6, which contains polyglycols and particularly polypropylene glycol and/or accelerators and/or non-ionic fatty acid polyglycol esters as flow agents.

8. Process for producing articles made of polyurethane foam, during which the article is produced in the conventional manner by foaming in a mould, characterized in that the mould is treated before being fed with the foam-forming constituents with a release agent according to one of claims 1 to 7.

## Revendications

1. Agent de séparation contenant de la cire, de la graisse et/ou du pétrolatum ,approprié à la production d'objets en mousse de polyuréthane, sous la forme d'une émulsion ou dispersion aqueuse sans solvants organiques, composée de substances connues et efficaces pour la séparation ainsi que, le cas échéant, des additifs habituels avec une teneur en eau d'au moins 60% en poids, avantageusement de 85 à 96% en poids, où l'eau est masquée par l'utilisation d'un agent auxiliaire de masquage par l'effet de la mésomorphie lyotrope et où l'utilisation de savons en tant qu'agent auxiliaire unique de masquage, est exclue.

2. Agent de séparation selon la revendication 1, où l'agent auxiliaire de masquage est un agent tensioactif ayant une valeur de HLB de 8 à 15 et, avantageusement de 10 à 12 ou, respectivement, un mélange de tels agents tensio-actifs.

3. Agent de séparation selon la revendication 2, où l'agent tensio-actif est un polyglycol éther d'alcool gras ou, respectivement, un alcool gras éthoxylé ou bien un mélange de ces composés avec un degré d'éthoxylation de 5 à 12 et, avantageusement, de 7 à 9.

**4.** Agent de séparation selon l'une quelconque des revendications 1 à 3, où les ou l'une des substances efficaces pour la séparation se composent d'une ou plusieurs microcires ayant des points de fusion compris entre 50 et 120 ° C.

**5.** Agent de séparation selon l'une quelconque des revendications 1 à 4, où les ou l'une des substances efficaces pour la séparation se composent d'une fraction de pétrolatum épaissie au moyen d'un épaississant organique ou inorganique.

**6.** Agent de séparation selon l'une quelconque des revendications 1 à 5 qui contient, en tant que substances supplémentaires efficaces pour la séparation, un agent traditionnel de séparation de silicone et/ou des savons.

**7.** Agent de séparation selon l'une quelconque des revendications 1 à 6, qui contient des polyglycols, en particulier du polypropylène glycol et/ou des accélérateurs et/ou du polyglycol ester d'acide gras non ionique, en tant qu'agent nivelant.

**8.** Procédé pour la production d'objets en mousse de polyuréthane, où l'objet est fabriqué, de la manière traditionnelle, par formation de mous se, dans un moule, caractérisé en ce qu'on traite le moule, avant de le charger des composants formant la mousse, au moyen d'un agent de séparation selon l'une quelconque des revendications 1 à 7.